# EUROPÄISCHE PATENTSCHRIFT

(11) **EP 3 316 343 B1**
(45) Veröffentlichungstag und Bekanntmachung des Hinweises auf die Patenterteilung: **27.05.2020**
(21) Anmeldenummer: 17196095.8
(22) Anmeldetag: 12.10.2017
(51) Int. Cl.: H01M 2/10, F16F 15/08

(54) **BATTERIEMODUL**
BATTERY MODULE
MODULE DE PILE

(30) Priorität: 26.10.2016 DE 102016221076
(43) Veröffentlichungstag der Anmeldung: 02.05.2018
(73) Patentinhaber: Robert Bosch GmbH, 70442 Stuttgart (DE)
(72) Erfinder: Lutz, Juergen, 71282 Hemmingen (DE); Wolff, Jochen, 71679 Asperg (DE); Zink, Markus, 70439 Stuttgart (DE)

(56) Entgegenhaltungen:
- CN-A- 105 118 939
- DE-A1-102011 016 081
- DE-A1-102014 108 803
- JP-A- 2015 161 351
- US-A1- 2010 136 396

## Beschreibung

Die vorliegende Erfindung betrifft ein Batteriemodul mit federelastisch gelagertem Batteriemodulgehäuse und ein Dämpfungselement für ein Batteriemodul.

### Stand der Technik

Batteriemodule für Elektrofahrzeuge weisen im Inneren eines Außengehäuses meist ein Batteriemodulgehäuse bzw. einen Batteriezellhalter zur Aufnahme von Batteriezellen auf. Die Fixierung des Batteriemodulgehäuses im Außengehäuse erfolgt typischerweise durch Nuten, Führungsleisten, Verschraubungen und/oder Rastvorrichtungen. Diese Verbindungen sind mindestens in einer Raumrichtung starr, so dass mechanische Bewegungen und/oder Vibrationen des Außengehäuses zumindest in der starren Richtung auf das Batteriemodulgehäuse bzw. die Batteriezellen übertragen werden. Außerdem werden thermische Ausdehnungen des Batteriemodulgehäuses und/oder des Außengehäuse durch eine starre Fixierung nicht ausgeglichen. Um die Ansprüche der ISO 16750-3 Bedingungen zum Schutz vor mechanischer Vibration zu erfüllen, können Elastomere, Schaumstoff oder Gummis in einem Batteriemodul angeordnet sein. Diese einfachen Dämpfungselemente sind bei anhaltender Belastung allerdings nicht langzeitstabil. Außerdem sind diese einfachen Dämpfungselemente bei der Montage nur schwer nachträglich zwischen den Batteriezellhalter und das Außengehäuse einzuschieben.

Die Schrift US 2010/0136396 A1 offenbart ein System zur Verhinderung einer Ausbreitung eines thermischen Runaways. Die DE 10 2014 108 803 A1 offenbart einen Energiespeicher für ein Fahrzeug, wobei zwischen einem Gehäuse des Energiespeichers und einer Energiespeicherzellenanordnung eine Ausgleichsvorrichtung angeordnet ist.

### Offenbarung der Erfindung

Das Batteriemodul umfasst ein Außengehäuse und ein Batteriemodulgehäuse. Das Batteriemodulgehäuse ist im Inneren des Außengehäuses angeordnet und zur Aufnahme mindestens einer Batteriezelle eingerichtet. Das Batteriemodul weist außerdem wenigstens ein Dämpfungselement auf, wobei das Dämpfungselement zwischen dem Batteriemodulgehäuse und dem Außengehäuse angeordnet ist. Das Dämpfungselement weist einen federelastischen Bereich auf, wodurch es zur mechanischen Dämpfung einer Bewegung des Außengehäuses auf das Batteriemodulgehäuse zu, oder umgekehrt, eingerichtet ist. Mechanische Kräfte auf das Batteriemodulgehäuse, die elektrischen Kontakte und/oder die Batteriezellen werden somit vorteilhafterweise durch das Dämpfungselement reduziert. Außerdem wird durch das Dämpfungselement ein thermischer Toleranzausgleich erzeugt. Das Dämpfungselement umfasst außerdem mindestens eine Gleitschicht. Dadurch wird das Dämpfungselement nicht auf Scherung beansprucht, wodurch die Stabilität bzw. die Lebensdauer des Dämpfungselements erhöht und ein Einschieben des Dämpfungselements bei der Montage ermöglicht wird.

Das Dämpfungselement weist zusätzlich einen Versteifungsbereich auf, umfassend ein unelastisches bzw. steifes Polymermaterial. Durch den Versteifungsbereich wird das Dämpfungselement in einer Richtung senkrecht zur Federwirkung bzw. zur Dämpfungsrichtung versteift. Durch die Versteifung des Dämpfungselements wird insbesondere eine verbesserte Handhabung des Dämpfungselements bei der Fertigung des Dämpfungselements, beim Transport des Dämpfungselements, beim Auspacken des Dämpfungselements und/oder in der Montage des Batteriemoduls erreicht. Das Dämpfungselement kann beispielsweise mittels des Versteifungsbereiches und der Gleitschicht nachträglich leicht zwischen dem Batteriemodulgehäuse und dem Außengehäuse eingeschoben werden. Bevorzugt weist das Batteriemodul mindestens ein Dämpfungselement an einer äußeren Seite des Batteriemodulgehäuses auf, beispielsweise an einer Unterseite, einer Oberseite, einer Stirnseite und/oder einer Längsseite des Batteriemodulgehäuses. In einer weiterführende Ausführung umfasst das Batteriemodul wenigstens ein Dämpfungselements an jeder äußeren Seite. Dadurch kann das Batteriemodulgehäuse allseitig federelastisch in dem Außengehäuse gelagert werden, wodurch mechanische Stöße auf das Außengehäuse nicht auf die Batteriezellen bzw. die elektrischen Kontakte und/oder eine Elektronik übertragen werden.

In einer weiteren Ausführung umfassen das Außengehäuse und/oder das Batteriemodulgehäuse an wenigstens einer Seite zwischen dem Batteriemodulgehäuse und dem Außengehäuse mindestens einen mechanischen Anschlag. Der mechanische Anschlag begrenzt den Federweg bzw. die Stauchung des federelastischen Bereichs des Dämpfungselements. Dadurch wird eine Schädigung des Dämpfungselements, ein Schwingen oder eine zu starke Bewegung des Batteriemodulgehäuses im Außengehäuse bei Belastung vermieden.

Die Erfindung betrifft außerdem das Dämpfungselement des Batteriemoduls, wobei das Dämpfungselement den federelastischen Bereich und die Gleitschicht umfasst.

Der federelastische Bereich des Dämpfungselements kann als Hohlprofil ausgestaltet sein, d.h. der federelastische Bereich des Dämpfungselements umfasst in dieser Ausgestaltung einen Hohlraum. Dadurch kann eine gute Federwirkung bei einer verbesserten Steifigkeit des Dämpfungselements erreicht werden, wodurch die Montage und die Demontage vereinfacht wird.

Optional kann das Dämpfungselement zusätzlich wenigstens einen Versteifungsbereich aufweisen. Bevorzugt umfasst das Dämpfungselement zwei Versteifungsbereiche, so dass eine verbesserte Steifigkeit des Dämpfungselements erreicht wird, wodurch die Montage und die Demontage vereinfacht wird. Außerdem wird bevorzugt der Versteifungsbereich mit der Gleitschicht beschichtet, wodurch die Gleitschichtfunktion verbessert wird.

Bevorzugt umfasst der elastische Bereich des Dämpfungselements ein elastisches Polymermaterial, insbesondere ein thermoplastisches Elastomer und/oder ein Silikon. Der Versteifungsbereich weist vorzugsweise ebenfalls ein elastisches Polymermaterial auf, beispielsweise das gleiche thermoplastisches Elastomer wie der elastische Bereich. Die Gleitschicht weist in einer bevorzugten Ausgestaltung einen Festschmierstoff auf, insbesondere Polytetrafluorethylen (PTFE), Molybdändisulfid (MoS₂) und/oder Graphit.

Die vorliegende Erfindung wird nachfolgend anhand bevorzugter Ausführungsformen und beigefügter Zeichnungen erläutert.
- Figur 1a:: Detailansicht eines Dämpfungselements im Querschnitt
- Figur 1b:: Detailansicht eines Dämpfungselements mit Gleitschicht am Batteriemodulgehäuse
- Figur 1c:: Detailansicht eines Dämpfungselements mit zwei Gleitschichten
- Figur 1d:: Detailansicht eines Dämpfungselements mit Versteifungsbereich
- Figur 1e:: Detailansicht eines Dämpfungselements mit Hohlprofil
- Figur 1f:: Detailansicht eines Dämpfungselements mit alternativem Hohlprofil
- Figur 2:: Batteriemodul im Querschnitt
- Figur 3:: 3D-Darstellung eines Batteriemodulgehäuses mit Dämpfungselementen
- Figur 4:: 3D-Darstellung eines Batteriemoduls
- Figur 5:: Batteriemodul aus Figur 4 im Querschnitt
- Figur 6:: Detailansicht des Batteriemoduls aus Figur 5

### Ausführungsbeispiele

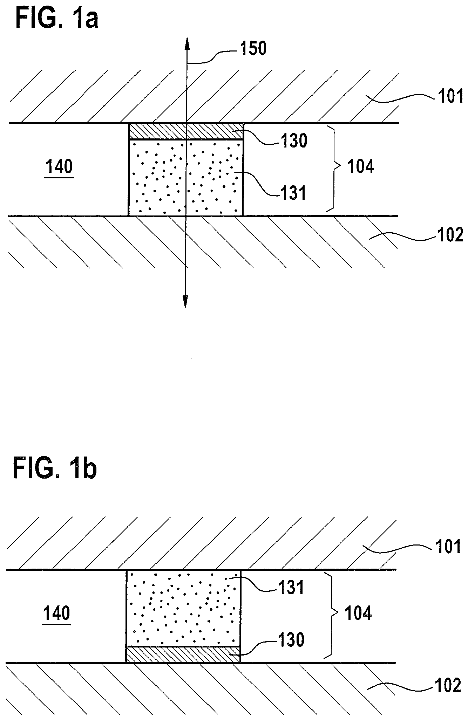

In Figur 1a ist eine Detailansicht eines Dämpfungselements 104 dargestellt. Das Dämpfungselement 104 ist im Inneren 140 eines Außengehäuses 101 zwischen einem Batteriemodulgehäuse 102 und dem Außengehäuse 101 angeordnet. Das Dämpfungselement 104 umfasst einen federelastischen Bereich 131 und eine Gleitschicht 130. Der federelastische Bereich 131 weist insbesondere ein Elastomer auf, d.h. beispielsweise Silikon, Gummi und/oder Naturkautschuk. Das Dämpfungselement 104 ist zur Dämpfung von mechanischen Bewegungen bzw. Kräften vom Außengehäuse 101 auf das Batteriemodulgehäuse 102 oder umgekehrt eingerichtet, d.h. das Dämpfungselement 104 weist eine Dämpfungsrichtung 150 auf, wobei die Dämpfungsrichtung 150 dem kürzesten Abstand zwischen dem Außengehäuse 101 und dem Batteriemodulgehäuse 102 entspricht. Die Dämpfungsrichtung 150 ist in Figur 1a dargestellt. Der federelastische Bereich 131 wird in der Dämpfungsrichtung 150 durch mechanische Belastungen gedehnt und gestaucht. Gleichzeitig erlaubt das Dämpfungselement 104 den Ausgleich thermischer Ausdehnungen von dem Batteriegehäuse 102 und/oder dem Außengehäuse 101 in der Dämpfungsrichtung 150. Die Gleitschicht 130 ist in diesem Ausführungsbeispiel zwischen dem elastischen Polymer 131 und dem Außengehäuse 101 angeordnet und umfasst einen Festschmierstoff, insbesondere Polytetrafluorethylen (PTFE), Molybdändisulfid (MoS₂) und/oder Graphit. Bei einer Bewegung des Außengehäuses 101 oder des Batteriemodulgehäuses 102 senkrecht zur Dämpfungsrichtung, resultiert ein Abgleiten des Dämpfungselements 104 an dem Außengehäuse 101. Demnach wird das Dämpfungselements 104 nicht auf mechanische Scherung belastet. Dadurch wird die Langzeitstabilität des Dämpfungselements 104 erhöht. Alternativ kann die Gleitschicht 130 auch zwischen dem Batteriemodulgehäuse 102 und dem elastischen Polymer 131 angeordnet sein, wie in Figur 1b dargestellt.

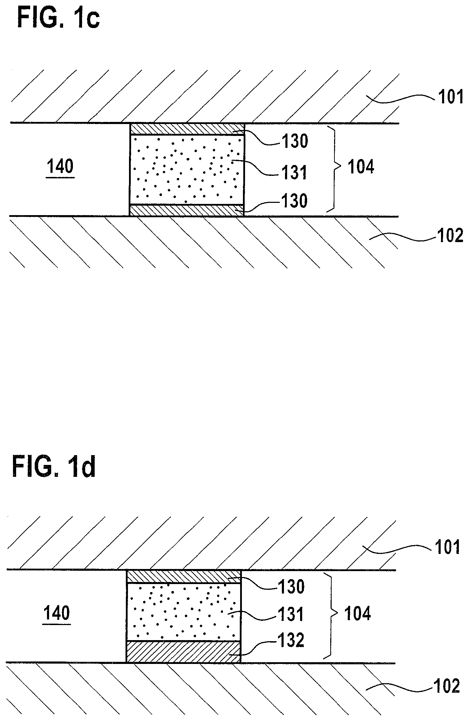

In einer alternativen Ausführungsform aus Figur 1c, umfasst das Dämpfungselement 104 zwei Gleitschichten 130 und einen federelastischen Bereich 131, wobei eine Gleitschicht 130 das Außengehäuse 101 und die andere Gleitschicht 130 das Batteriemodulgehäuse 102 unmittelbar kontaktieren. Der federelastische Bereich 131 ist zwischen den zwei Gleitschichten 130 des Dämpfungselements 104 angeordnet.

In einer alternativen Ausführungsform aus Figur 1d, umfasst das Dämpfungselement 104 zusätzlich einen Versteifungsbereich 132. Der Versteifungsbereich 132 kann zwischen der Gleitschicht 130 und dem federelastischen Bereich 131 oder, wie in Figur 1d dargestellt, mit dem federelastischen Bereich 131 oder alternativ mit der Gleitschicht 130 in unmittelbarem Kontakt sein. Der federelastische Bereich 131 kann alternativ zwischen zwei Versteifungsbereichen 132 angeordnet sein. Eine Anordnung der Gleitschicht 130 kann demnach auch auf dem Versteifungsbereich 132 erfolgen. Der Versteifungsbereich 132 resultiert in einer verbesserten Handhabbarkeit des Dämpfungselements 104, insbesondere bei der Montage des Batteriemoduls 100. Der Versteifungsbereich 132 kann beispielsweise Polyethylen, Polypropylen, Polyvinylchlorid oder eine alternatives, nicht elastisches Polymermaterial umfassen.

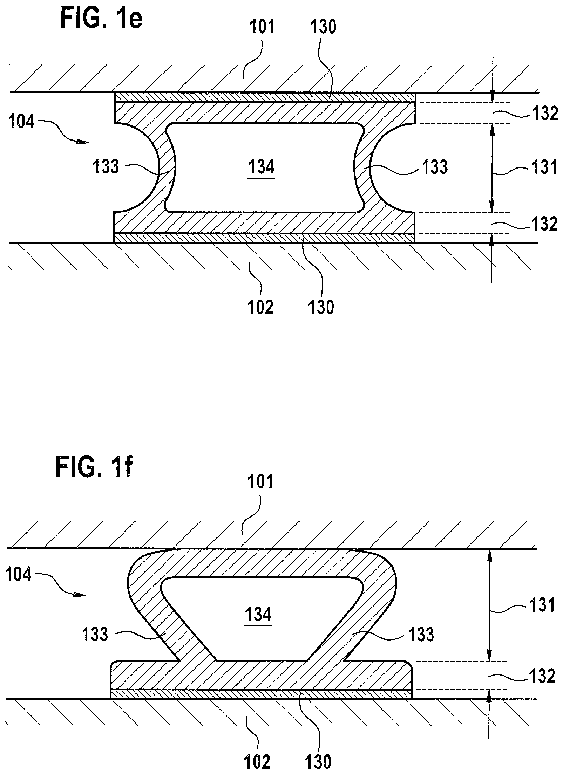

In Figur 1e ist ein Querschnitt einer weiteren, alternativen Ausgestaltung des Dämpfungselements 104 dargestellt. In dieser Ausgestaltung weist der federelastische Bereich 131 einen Hohlraum 134 bzw. ein Hohlprofil auf. Der Hohlraum 134 des Dämpfungselements 104 bzw. des federelastischen Bereichs 131 ist insbesondere in Längsrichtung des Dämpfungselements 104 ausgeführt. Dadurch wird die Federwirkung des federelastischen Bereiches 131 zumindest teilweise durch den strukturellen Aufbau des federelastischen Bereiches 131 erzielt, d.h. die Federwirkung resultiert nicht nur durch die Elastizität des Materials des federelastischen Bereiches 131 sondern durch eine federelastische Wirkung der Seitenwände 133 des federelastischen Bereiches 131. Dadurch kann in dieser Ausgestaltung die Steifigkeit des Dämpfungselements 104 bzw. des federelastischen Bereiches 131 gegenüber den Ausgestaltungen des Dämpfungselements 104 in den Figuren 1a bis 1d erhöht werden. Der federelastische Bereich 131 umfasst bevorzugt ein elastisches Polymermaterial. Außerdem weist die weitere, alternative Ausgestaltung des Dämpfungselements 104 aus Figur 1e zwei Versteifungsbereiche 132 auf, wobei mindestens einer der Versteifungsbereiche 132 mit der Gleitschicht 130 beschichtet ist. Durch eine unmittelbare Anordnung der Gleitschicht 130 auf dem Versteifungsbereich bzw. eine unmittelbare Kontaktierung zwischen der Gleitschicht 130 und dem Versteifungsbereich 132, wird eine Gleitfunktion der Gleitschicht 130 gegenüber den Ausgestaltungen des Dämpfungselements 104 in den Figuren 1a bis 1d verbessert.

In Figur 1f ist ein Querschnitt einer anderen, alternativen Ausgestaltung des Dämpfungselements 104 mit einem Hohlprofil dargestellt. Diese Ausgestaltung des Dämpfungselements 104 weist gegenüber der Ausgestaltung aus Figur 1e lediglich einen Versteifungsbereich 132 sowie eine andere Querschnittsfläche des Hohlraums 134 bzw. eine andere Ausgestaltung der Seitenwände 133 auf. Die in Figur 1f dargestellte Ausgestaltung des Dämpfungselements 104 weist beispielsweise Vorteile in der Herstellung auf, d.h. das Dämpfungselement 104 lässt sich in dieser Ausgestaltung leichter extrudieren.

Bevorzugt ist das Dämpfungselement 104 und/oder der Versteifungsbereich 132 als elektrischer Isolator ausgeführt, sodass eine Übertragung von elektrischen Ladungen zwischen dem Außengehäuse 101 und dem Batteriemodulgehäuse 102 bzw. ein unbeabsichtigter Kurzschluss einer Batterie über das Außengehäuse 101 vermieden wird.

In einem weiteren Ausführungsbeispiel ist das Dämpfungselement 104 thermisch schlecht leitfähig, sodass ein durch die Umgebung aufgeheiztes Außengehäuse 102 die Wärme nur langsam an das Batteriemodulgehäuse 102 überträgt.

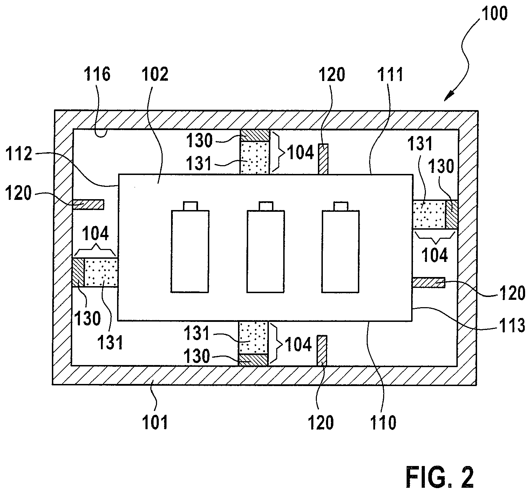

In Figur 2 ist ein Batteriemodul 100 im Querschnitt mit einem Batteriemodulgehäuse 102 und einem Außengehäuse 101 dargestellt. An einer äußeren Seite, d.h. an einer Unterseite 110, an einer Oberseite 111 und zwei Längsseiten 112 und 113 des Batteriemodulgehäuses 102 ist jeweils ein Dämpfungselement 104 angeordnet. Alternativ können an jeder äußeren Seite 110, 111, 112 und 113 mehrere Dämpfungselemente 104 angeordnet sein. Das Batteriemodulgehäuse 102 ist demnach in Figur 2 sowohl in vertikaler Richtung als auch in horizontaler Richtung beidseitig durch Dämpfungselemente 104 im Außengehäuse 101 federelastisch gelagert bzw. fixiert. Die Gleitschichten 130 ermöglichen ein Abgleiten des Dämpfungselements 104 an der Innenfläche 116 des Außengehäuses 101 senkrecht zur Dämpfungsrichtung des jeweiligen Dämpfungselements 104. Die Dämpfungselemente 104 werden demnach nicht auf Scherung beansprucht. Dadurch werden eine längere Lebensdauer des Dämpfungselements 104 erreicht. Außerdem wird durch die Gleitschicht 130 ein Einschieben der Dämpfungselemente 104 zwischen das Außengehäuse 101 und das Batteriemodulgehäuse 102 während der Montage ermöglicht.

In einer Weiterführung des Ausführungsbeispiels aus Figur 2, kann zusätzlich an mindestens einer Stirnfläche 114 oder 115 ein Dämpfungselement 104 angeordnet sein, wodurch das Batteriemodulgehäuses 102 dreidimensional federelastisch im Außengehäuse 101 gehalten ist. In dieser bevorzugten Ausführung kontaktieren sich das Außengehäuse 101 und das Batteriemodulgehäuse 102 nicht unmittelbar.

Optional kann, wie in Figur 2 dargestellt, wenigstens ein mechanischer Anschlag 120 zwischen dem Außengehäuse 101 und dem Batteriemodulgehäuse 102 angeordnet sein. Ein mechanischer Anschlag 120 begrenzt die maximale Stauchung des Dämpfungselements 104. In Figur 2 sind vier mechanische Anschläge 120 realisiert, wobei in diesem Beispiel zwei mechanische Anschläge 120 am Batteriemodulgehäuse 102 und zwei mechanische Anschläge 120 am Außengehäuse 101 ausgeprägt sind. Die mechanischen Anschläge 120 begrenzen die Stauchung des Dämpfungselements 104 in Dämpfungsrichtung.

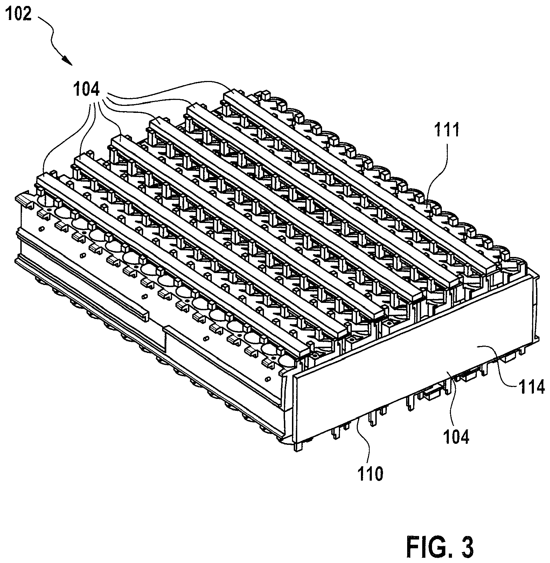

In Figur 3 ist ein Batteriemodulgehäuse 102 mit einer Vielzahl von Batteriezellen dargestellt. Das Batteriemodulgehäuse 102 umfasst an der Unterseite 110 und der Oberseite 111 jeweils sechs in Längsrichtung des Batteriemodulgehäuses 102 streifenförmig ausgeführte Dämpfungselemente 104. Außerdem umfasst das Batteriemodulgehäuse 102 an den Stirnseiten 114 und 115 jeweils ein größer flächiges Dämpfungselement 104.

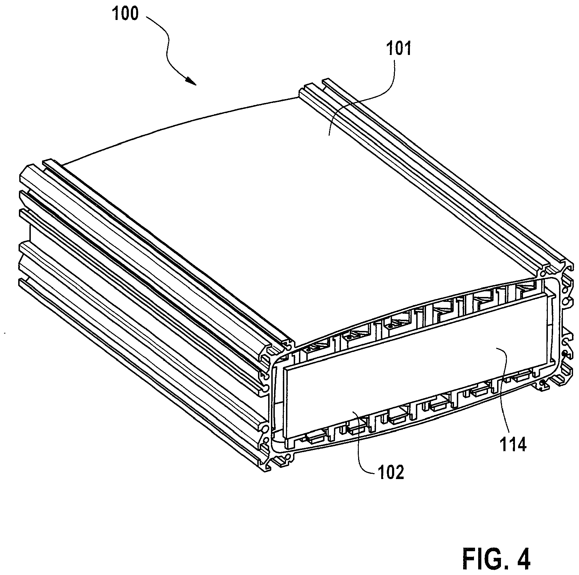

In Figur 4 ist ein Batteriemodul 100, umfassend ein Außengehäuse 101 und das Batteriemodulgehäuse 102 aus Figur 3, dreidimensional dargestellt. Das Batteriemodulgehäuse 102 ist im Inneren des Außengehäuses 101 angeordnet. Das Außengehäuse 101 ist optional durch einen nicht dargestellten Deckel an der Öffnung verschlossen.

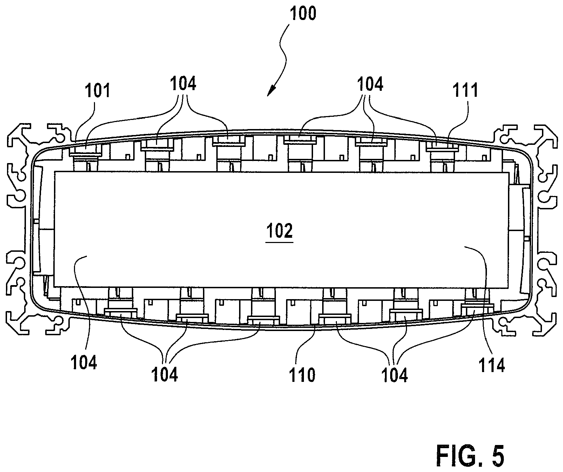

In Figur 5 ist das in Figur 3 und in Figur 4 dargestellte Batteriemodul 100 bzw. das Batteriemodulgehäuse 102 im Querschnitt dargestellt. An der Unterseite 110 und der Oberseite 111 sind die jeweils sechs Dämpfungselemente 104 dargestellt. An der Stirnseite 114 ist das größer flächige Dämpfungselement 104 zu erkennen.

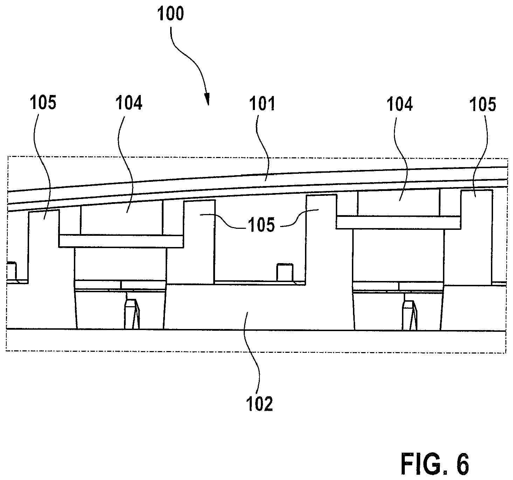

In Figur 6 ist eine Detailansicht des Batteriemoduls 100 mit dem Außengehäuse 101 und dem Batteriemodulgehäuse 102 dargestellt. Das Batteriemodulgehäuse 102 kontaktiert das Außengehäuse 101 in vertikaler Richtung nicht unmittelbar, sondern es ist über die Dämpfungselemente 104 federelastisch im Außengehäuse 101 gelagert. Die mechanischen Anschläge 105 begrenzen eine Stauchung der dargestellten Dämpfungselemente 104 in vertikaler Richtung bzw. in Dämpfungsrichtung.

## Patentansprüche

1. Batteriemodul (100), wenigstens umfassend
• ein Außengehäuse (101), und
• ein Batteriemodulgehäuse (102), wobei das Batteriemodulgehäuse (102) im Inneren des Außengehäuses (101) angeordnet und zur Aufnahme mindestens einer Batteriezelle (103) ausgebildet ist, und
• wenigstens ein Dämpfungselement (104), wobei das Dämpfungselement (104)
i. einen federelastischen Bereich (131) umfasst, und
ii. zwischen dem Batteriemodulgehäuse (102) und dem Außengehäuse (101) angeordnet ist, wobei das Dämpfungselement (104) mittels des federelastischen Bereichs (131) zur mechanischen Dämpfung einer Bewegung des Außengehäuses (101) auf das Batteriemodulgehäuse (102) zu oder umgekehrt eingerichtet ist, **dadurch gekennzeichnet, dass**
• das Dämpfungselement (104) zumindest eine Gleitschicht (130) umfasst, wobei das wenigstens eine Dämpfungselement (104) einen Versteifungsbereich (132) umfasst, wobei der Versteifungsbereich ein unelastisches Polymermaterial umfasst und der Versteifungsbereich (132) das Dämpfungselement (104) senkrecht zur Dämpfungsrichtung versteift.

2. Batteriemodul (100) nach Anspruch 1, **dadurch gekennzeichnet, dass** das wenigstens eine Dämpfungselement (104) an mindestens einer äußeren Seite (110, 111, 112, 113, 114, 115) des Batteriemodulgehäuses (102) angeordnet ist.

3. Batteriemodul (100) nach einem der vorhergehenden Ansprüche, **dadurch gekennzeichnet, dass** wenigstens ein mechanischer Anschlag (105, 120) an mindestens einer äußeren Seite (110, 111, 112, 113, 114, 115) des Batteriemodulgehäuses (102) und/oder an einer Innenfläche des Außengehäuses (101) zwischen dem Batteriemodulgehäuse (102) und dem Außengehäuse (101) ausgeprägt ist.

## Claims

1. Battery module (100), at least comprising
• an external housing (101), and
• a battery module housing (102), wherein the battery module housing (102) is arranged in the interior of the external housing (101) and is designed for accommodating at least one battery cell (103), and
• at least one damping element (104), wherein the damping element (104)
i. comprises a spring-elastic region (131), and
ii. is arranged between the battery module housing (102) and the external housing (101), wherein the damping element (104) is designed for mechanically damping a movement of the external housing (101) towards the battery module housing (102), or vice versa, by means of the spring-elastic region (131),
**characterized in that**
• the damping element (104) comprises at least one sliding layer (130), wherein the at least one damping element (104) comprises a reinforcement region (132), wherein the reinforcement region comprises a non-elastic polymer material and the reinforcement region (132) reinforces the damping element (104) perpendicularly in relation to the damping direction.

2. Battery module (100) according to Claim 1, **characterized in that** the at least one damping element (104) is arranged on at least one outer side (110, 111, 112, 113, 114, 115) of the battery module housing (102).

3. Battery module (100) according to either of the preceding claims, **characterized in that** at least one mechanical stop (105, 120) is formed on at least one outer side (110, 111, 112, 113, 114, 115) of the battery module housing (102) and/or on an inner face of the external housing (101) between the battery module housing (102) and the external housing (101).

## Revendications

1. Module de batterie (100), comprenant au moins :
- un boîtier extérieur (101), et
- un boîtier de module de batterie (102), le boîtier de module de batterie (102) étant disposé à l'intérieur du boîtier extérieur (101) et étant réalisé pour recevoir au moins une cellule de batterie (103), et
- au moins un élément d'amortissement (104), l'élément d'amortissement (104)
i. comprenant une région élastique à ressort (131) et
ii. étant disposé entre le boîtier de module de batterie (102) et le boîtier extérieur (101), l'élément d'amortissement (104) étant prévu pour amortir mécaniquement, au moyen de la région élastique à ressort (131), un mouvement du boîtier extérieur (101) vers le boîtier de module de batterie (102) ou inversement,
**caractérisé en ce que**
- l'élément d'amortissement (104) comprend au moins une couche de glissement (130), l'au moins un élément d'amortissement (104) comprenant une région de rigidification (132), la région de rigidification comprenant un matériau polymère non élastique et la région de rigidification (132) rigidifiant l'élément d'amortissement (104) perpendiculairement à la direction d'amortissement.

2. Module de batterie (100) selon la revendication 1, **caractérisé en ce que** l'au moins un élément d'amortissement (104) est disposé au niveau d'au moins un côté extérieur (110, 111, 112, 113, 114, 115) du boîtier de module de batterie (102).

3. Module de batterie (100) selon l'une quelconque des revendications précédentes, **caractérisé en ce qu'**au moins une butée mécanique (105, 120) est marquée au niveau d'au moins un côté extérieur (110, 111, 112, 113, 114, 115) du boîtier de module de batterie (102) et/ou au niveau d'une surface intérieure du boîtier extérieur (101) entre le boîtier de module de batterie (102) et le boîtier extérieur (101).
